# EUROPEAN PATENT SPECIFICATION

(11) **EP 3 976 540 B1**
(45) Date of publication and mention of the grant of the patent: **08.05.2024**
(21) Application number: 19850825.1
(22) Date of filing: 21.11.2019
(51) Int. Cl.: C03C 3/087, C03C 3/091, C03C 3/097, C03C 21/00

(54) **PREPARATION OF GLASS FOAM FROM RECYCLED GLASS**
HERSTELLUNG VON GLASSCHAUM AUS RECYCLINGGLAS
PRÉPARATION DE MOUSSE DE VERRE À PARTIR DE VERRE RECYCLÉ

(30) Priority: 31.05.2019 TR 201908435
(43) Date of publication of application: 06.04.2022
(73) Proprietor: ESKISEHIR TEKNIK UNIVERSITESI, Eskisehir (TR); Anadolu Universitesi, Tepebasi/Eskisehir (TR)
(72) Inventor: EVIRGEN, Burak, Tepebasi/ Eskisehir (TR); KULA, Ekrem, Tepebasi/Eskisehir (TR); TUNCAN, Mustafa, Tepebasi/Eskisehir (TR)
(74) Representative: Handanoglu, Erdal
(86) International application number: PCT/TR2019/050980
(87) International publication number: WO 2020/242407

(56) References cited:
- WO-A1-2011/048446
- DATABASE WPI Week 200515 Thomson Scientific, London, GB; AN 2005-137329 XP002798839, & JP 2005 041754 A (KENSETSU KANKYO ENG YG) 17 February 2005 (2005-02-17)
- DATABASE WPI Week 200718 Thomson Scientific, London, GB; AN 2007-182478 XP002798840, & RU 2 291 126 C1 (PERM FOAMED SILICATES PRODN STOCK CO) 10 January 2007 (2007-01-10)
- DATABASE WPI Week 200220 Thomson Scientific, London, GB; AN 2002-151242 XP002798841, & JP 2001 302281 A (NIPPON SHEET GLASS CO LTD) 31 October 2001 (2001-10-31)
- DATABASE WPI Week 200062 Thomson Scientific, London, GB; AN 2000-645895 XP002798842, & RU 2 149 146 C1 (NAUMOV V I) 20 May 2000 (2000-05-20)

## Description

### Field of the Invention

The present invention relates to a method of producing glass foam obtained by recycling of broken window glasses.

### Background of the Invention

Glass foam is a technological and industrial material, which is used in buildings, oil platforms and tankers, oil and asphalt tanks, shipbuilding and military industry, cold storage rooms, and in all areas requiring insulation and sealing. However, due to lack of experience and insufficient technology, only a few companies worldwide are interested in glass foam production. Soda - lime glass (SLS) powder was selected as the raw material considering that there is a stock of tons of waste window glass globally. This way, both waste recycling is ensured and a significant reduction is obtained in the product costs.

As a result of more than 120 test samples, 6 different types of industrial scale glass foam were obtained with combinations of calcite, dolomite, coal and glycerin type of foaming agents. All products have internationally valid TSE approved A1 class non-combustibility certificate. The products providing heat, sound and water insulation at the same time with a single material can be used in facing works, production of decorative aesthetic elements and insulation of fittings within industrial scale. The products, which are suitable for colored production and which can be easily shaped and cut, have a paintable and plasterable surface. The environmentally friendly glass foams of the present invention are suitable for recycling over and over again.

Taken into consideration both the feedback received from the sector representatives and the building stock in worldwide, the glass foam produced entirely from waste materials is a promising product. Domestic production of glass foam as a result of the TUBITAK 1005 project support is considered a great success in Turkey which is dependent on foreign energy. This way, the infrastructure will be formed for the commercial production of the products in the domestic market.

Great Britain patent document no. GB622218 (A), one of the state of the art patent documents, relates to a process for production of glass foam by sintering a mixture of powdered glass and powdered gassing agent.

Korean patent document no. KR100194107, a state of the art document, discloses a method of producing glass foam using calcium hydroxy phosphate compound instead of a foaming agent such as CaCO3, dolomite (CaCO3·MgCO3), C and SiC. The resultant foam glass has high strength due to the respective pores with high homogeneity, thermal treatment in a wide range and controllable quantity and size of pores.

Japanese patent document JP2005 041754 A, describes the preparation of glass foam from a mixture of glass powder and foaming agent.

The invention disclosed in Great Britain patent document no. GB682356 (A), one of the state of the art patent documents, relates to a process for production of cellular glass bodies by sintering a mixture of powdered glass and powdered gassing agent. The constituents consist of quartz, soda, and lime together with only 10.0% - 50.0% by weight of waste glass material. The mixture is heated first to a sintering temperature at which the gassing agent is inactive, then to a higher gassing temperature still insufficient to cause complete fusion of the glass; the bloated body is then cooled and annealed. By thus delaying the gassing till after the glass has cohered, a regular cell structure is obtained. It exhibits a resemblance in terms of use of dolomite, calcium carbonate, etc.

Almost none of the glass foams known in the prior art have an industrial scale production. Similarly, the glass foams produced in the studies in the literature are for small scale and experimental purposes. When a research is conducted regarding the product market on a global basis, it is seen that the market is monopolized by a few companies of European and American origin. There are non-standardized local productions in China. The extremely expensive production of the product due to the raw materials and foaming agents that are used, the grinding process, the mixing technique and high production temperature encourages supply of the product through importing.

### Summary of the Invention

The objective of the present invention is to be able to recycle wastes and produce environmentally friendly products by using entirely waste window glasses (SLS - Soda-Lime Glass) as raw material.

Another objective of the present disclosure is to use dolomite (CaMg(CO₃)₂), limestone (CaCO₃), oak coal and glycerin and their combinations, which are natural products, as the foaming agent in the production of glass foam.

A further objective of the present disclosure is to produce a noncombustible, durable and economical product that meets the international standards and provides heat, sound and water insulation at the same time.

Another objective of the present disclosure is to provide a product which, in addition to be able to be used in the form of flat plates in buildings, is suitable for use in various forms in all areas requiring sealing or insulation in the industry and is also suitable for decorative production as a result of molding.

### Detailed Description of the Invention

The present invention is a method of producing glass foam obtained by recycling of broken window glasses comprising the steps of
- obtaining and breaking waste window glasses, SLS - Soda Lime Glass, containing SiO₂ (average 70.0% by weight), Fe₂O₃, CaO, Al₂O₃, MgO and Na₂O as raw materials,
- grinding the broken glasses into a particle size of 100 microns,
- mixing 1.0-10.0% grinded dolomite (CaMg(CO₃)₂), 1.0-10.0% grinded limestone (CaCO₃), 1.0-5.0% oak coal powder and 1.0% glycerin as foaming agents into the grinded glass powders,
- placing the mixtures into the molds,
- evaporating the free water at 100°C for about 5 hours as the first stage of sintering process,
- subjecting to the second stage of the sintering process wherein, by keeping at different temperatures, the peak temperature reaches 750-800°C and 820-850°C with gradual temperature increases in approximately 10 hours,
- starting with a sudden temperature drop of about 200°C and then gradually reducing the temperature to reach room temperature after about 24 hours,
- removing the glass foams which cool down after the heat treatment from the molds and cutting them into desired shapes and sizes.

Two different waste glass powders and 10 different foaming agents such as calcite, dolomite, calcium carbonate, coal and glycerin were used to produce a total of about 120 different test samples. More than 30 heat diagrams were evaluated and it was focused on 10 of them, which provided adequate foaming process according to peak temperature values, waiting times, economy and applicability factors. A total of 6 different full-size glass foams with different contents having a layer size of 50.0 cm x 50.0 cm and thickness of 3.0, 6.0 and 9.0 cm were produced. Density, water absorption capacity, thermal conductivity, sound transmission, compressive strength, freeze-thaw resistance analyses were performed according to the related norms.

Dolomite and limestone active substances, which are to be added to the grinded glass powders and which have a loss of ignition value of 40.0-60.0%, should contain at least 35.0% and 50.0% CaO (Calcium oxide), respectively. The required proportions required for three different example formulas indicate the percentages by weight to be incorporated into the 100% amount of grinded waste glass raw material. These formulas are 6.0% limestone + 6.0% dolomite, 1.0% limestone + 2.0% oak coal, and 6.0% limestone + 1.0% glycerin.

### ANALYSIS RESULTS

**Determination of Non-Combustibility:** One of the most important parameters for thermal insulation materials is that the product should be non-combustible. Recently, fires caused by ignition of thermal insulation materials used within the purpose of facing member have been leading to loss of life and property worldwide. Thermal insulation materials such as XPS and EPS, which are already known to be combustible and easily flammable, provide a good level of insulation under standard environmental conditions. However, they pose a serious problem at any high temperature and are not resistant to chemical solvents. Therefore, non-combustibility tests are provided for the glass foams that are produced. The fire resistance test was conducted by TSE in accordance with the TS EN 13820 standard according to the European Commission decision 96/603/EC. In accordance with the European Commission Decision numbered 1996D0603 - EN - 12.06.2003 - 002.001; the organic material content of the "cellular glass" product was determined according to the method defined in TS EN 13820 standard, and upon finding out that the said content was below 1.0%, class A1 non-combustibility certificate was received for all of the samples.

**Density:** For cellular glass insulation material, production is generally carried out at density levels of 120 - 240 kg/m³ abroad. This value can be increased to 300 - 350 kg/m³ in insulation of industrial fitting products or in the facing in the Far East countries. The raw materials, foaming agents and the sintering are factors that directly impact the density values. The density values are naturally lighter than water due to the porous structure of the glass foam. Thus, the samples float on water. The weight and volume values of randomly selected glass foams of different sizes were determined and thereby the density values were calculated. The skeletal density standing out in porous materials such as glass foam varies between 180.5 and 256.0 kg/m³ for the products subject to this patent document. These values can be considered as the average values around the world. The densities are applicable in the case of the raw materials, additives and current furnace conditions used in the scope of the present patent application. Since layers, which may constitute extra weight such as adhesive mortar, plaster and wire lath required in other insulation materials, are not essential in the glass foam application; it is evident that the end product is highly suitable in terms of weight.

**Water Absorption Capacity:** The water absorption capacities were determined according to TS EN 12087 (Thermal insulating products for building applications - Determination of long term water absorption by immersion). Samples that have been partially immersed in water for 7 days are taken out at the end of the related period of time and allowed to rest for 10 minutes on a 45° inclined wire mesh and then weighed. While the water absorption capacity values of the glass foams subject to the present patent application vary between 0.50 and 6.99 kg/m³, it was observed that the glass foam having the smallest pore structure had a much higher water absorption capacity value, i.e. 32.36 kg/m³, compared to the other samples. This is another indicator that the products can be used for different purposes in waste disposal sites, petroleum plants or industrial plants producing harmful wastes.

**Thermal conductivity:** The thermal conductivity test apparatus required to calculate the thermal conductivity - thermal insulation values of glass foam samples has been produced taking into consideration the TS EN 12667, TS EN ISO 13787 and TS EN ISO 23993 standards. According to the test results, at the end of a period of 2 hours where the temperatures have reached a fixed value, the temperature change in the unit thickness is between 9.6°C/cm and 11.1°C/cm according to the temperature difference calculated between the inner and outer walls according to the thickness of the sample.

By means of the thermal conductivity test apparatus, the precise thermal conductivity coefficient (λ) values of the glass foams were determined. The apparatus used to determine the thermal conductivity of the materials complies with ASTM D 5334, D 5930 - 97 and IEEE 442 - 1981 standards. As a result of the tests, thermal conductivity coefficients ranging from 0.034 W/m°K to 0.051 W/m°K were obtained. It was observed that the thermal conductivity values were in the range of 0.045 - 0.060 W/m°K as specified for glass foams produced in accordance with TS EN 13167 within the scope of TS 825 standard and were even lower in some samples. The results show that the glass foams produced can be used efficiently for thermal insulation purposes.

**Sound transmission:** A closed rectangular prism-shaped stainless steel chamber with dimensions of 50 cm x 50 cm x 100 cm was produced as it was in the thermal conductivity test apparatus. The inner parts were covered with sound proofing foam in order to provide sound insulation. The decibel value of the sound emitted from the loudspeaker used as the sound source in the process of experiment was first measured without the glass foam in between. In the next step, the focused glass foam was placed in mid portion and the decibel value of the sound at the same frequency was measured again. A siren sound lasting 80 seconds with an amplitude of 12 dB and frequency of 13 Hz was selected as the sound source. Two decibel meters were used to verify the decibel values. It was observed that the produced glass foams averagely provide a sound insulation of 20 - 30 decibels. This level provides the sound insulation average value of 25 dB which is especially desired in buildings such as hotels.

**Compressive Strength:** In the process of determining compressive strength of the samples, a uniaxial compression test apparatus which meets the loading conditions in TS EN 826 standard (Thermal insulating products for building applications - Determination of compression behavior) was used. In accordance with the said standard, a displacement controlled loading speed of 10.0% thickness of specimen per minute Each glass foam sample exhibited a specific collapse behavior. The most brittle samples are the ones in the glycerin-added batch. The axial stress values calculated averagely as 575.0 kPa and reaching the level of 1200.0 kPa in some samples; are at such higher levels incomparable with the other insulations plates such as xps, eps, stone wool and glass wool. The unit deformation values vary between 0.6% and 24.5%. Both the axial compression and deformation results prove that the products can be used successfully for different purposes in the construction sector.

**Freeze-Thaw Resistance:** The freeze-thaw test contains a systematic based on weight loss of the material under challenging outdoor weather conditions. Considering that the glass foam samples will also be exposed to the effects of the outdoor air; the resistance of the glass foam samples was evaluated in the freeze-thaw test device which was designed in accordance with prEN-ISO 2736 / 2-1993, ISO 5725/1 t0 6-1990CDF/CIF standards. In accordance with the standard, a testing process consisting of a total of 28 cycles of 12 hours each was carried out at temperatures between -20 C° and +20 C°. Although the amount of disintegrated material resulting at the end of the test in the samples subject to the present patent application is less than the value of 1.0% specified in the standard; no cracks, fragmentations or disintegration were observed in the samples. Thus the glass foams that were produced have sufficient freeze-thaw resistance.

The present invention enables both recycling of glass waste and production of an environmentally friendly product. In the production process, rock derivatives and coals which are already in nature are used. Auxiliary substances such as resins are not used as their prices are quite high. The fact that the raw materials and the foaming agents are waste and natural products significantly reduces the prices. This in turn reduces the cost of the end product.

While the products can be used for heat, sound and water insulation at the same time, they can also be used as aesthetic elements for decoration and design purposes in buildings. Similarly, they can be molded and used for various purposes in liquid or heat transmission lines, cooling plants, shipbuilding industry, petroleum plants and other industrial facilities. These domestic products can be used as replacement products instead of imported ones. Therefore, it will be possible to produce in the related sector and will have a positive effect on the national income.

The maximum sintering temperature in the production process is 830.0°C. Thus, the furnace capacity required for high temperatures and the required energy during production process are significantly reduced, thereby providing financial gain. Dry mixture was preferred instead of wet mixture and thus labor was reduced. A more effective production was provided by means of the stainless steel molds. When the preferred glass foam production process is evaluated from all of these point of views, it is apparent that the invention enables a very cheap glass foam production especially due to the preference of waste raw materials and additives and the low sintering temperature as well.

Plaster and paint can be applied directly on the product surfaces. Colored production can be provided by adding color to the powder mixture. It can be easily shaped both during and after the production. It is suitable for recycling.

In the process of glass foam production according to the present invention; stainless steel molds having sand blasted or paper-lining applied interior surface therein are used for the production of flat plates, whereas refractory ceramic molds are used for insulation of fitting details, decorative coating or production of architectural designs.

In a preferred embodiment of the present disclosure, glass foam of any desired color can be produced by mixing colored powder dyes into the powder mixture during the production stage.

In the present disclosure it is possible to produce a product whose surface can be painted by spray paint, oil paint and plastic paint thanks to its rough structure.

In the present disclosure, thanks to its porous structure, plaster can be applied directly on the product surface without requiring extra materials such as plaster mesh, joint tape, rabitz wire or distinction between rough-fine plastering.

In the present disclosure, the glass foams produced can be used again in the production process after being grinded.

In the present disclosure, commercially available waste glass powder is used instead of grinding broken glass.

## Claims

1. A method of producing glass foam obtained by recycling of broken window glasses;
**characterized by** comprising steps of obtaining and breaking waste window glasses, SLS - Soda Lime Glass, SiO₂, average 70% by weight, Fe₂O₃, CaO, Al₂O₃, MgO and Na₂O as raw materials, grinding the broken glasses into a particle size of 100 microns, mixing 1.0-10.0% grinded dolomite (CaMg(CO₃)₂), 1.0-10.0% grinded limestone (CaCO₃), 1.0-5.0% oak coal powder and 1.0% glycerin as foaming agents into the grinded glass powders, placing the mixtures into molds,
evaporating free water at 100°C for about 5 hours as a first stage of a sintering process, subjecting to a second stage of the sintering process wherein, by keeping at different temperatures, the peak temperature reaches 750-800°C and 820-850°C with gradual temperature increases in approximately 10 hours,
starting with a sudden temperature drop of about 200°C and then gradually reducing the temperature to reach room temperature after about 24 hours,
removing the glass foams, which cool down after the heat treatment, from the molds and cutting them into desired shapes and sizes.

## Patentansprüche

1. Ein Verfahren zur Herstellung von Glasschaum, der durch Recycling zerbrochener Fenstergläser gewonnen wird; **gekennzeichnet durch** folgende Schritte:
Gewinnung und Zerkleinerung von Fensterglasabfällen, SLS - Natronkalkglas, enthaltend SiO₂, durchschnittlich 70 Gew.-%,
Fe₂O₃, CaO, Al₂O₃, MgO und Na₂O als Rohstoffe,
Mahlen der zerbrochenen Gläser auf eine Partikelgröße von 100 Mikrometern,
Mischen von 1,0-10,0 % gemahlenem Dolomit (CaMg(CO₃)₂), 1,0-10,0 % gemahlenem Kalkstein (CaCO₃),
1,0-5,0 % Eichenkohlepulver und 1,0 % Glycerin als Schaumbildner in die gemahlenen Glaspulver zugeben, die Mischungen in Formen füllen,
Verdampfen von freiem Wasser bei 100°C für etwa 5 Stunden als erste Stufe eines Sinterprozesses,
Unterziehen einer zweiten Stufe des Sinterprozesses, wobei durch die Aufbewahrung bei unterschiedlichen Temperaturen die Spitzentemperatur 750-800 °C und 820-850 °C erreicht, bei der die Temperatur in etwa 10 Stunden allmählich ansteigt Beginnen mit einem plötzlichen Temperaturabfall von etwa 200 °C und senken die Temperatur dann allmählich ab, um nach etwa 24 Stunden Raumtemperatur zu erreichen. Entfernen der nach der Wärmebehandlung abgekühlten Glasschäume aus den Formen und Schneiden in gewünschte Formen und Größen.

## Revendications

1. Procédé de production de mousse de verre obtenue par recyclage de vitres cassées; **caractérisée par** les étapes suivantes:
l'obtention et le broyage de déchets de verre à vitre, SLS - Soda Lime Glass, contenant du SiO₂, en moyenne 70 % en poids,
Fe₂O₃, CaO, Al₂O₃, MgO et Na₂O comme matières premières,
broyer les verres cassés pour obtenir des particules d'une taille de 100 microns,
en mélangeant 1,0-10,0% de dolomie broyée (CaMg(CO₃)₂), 1,0-10,0% de calcaire broyé (CaCO₃), 1,0-5,0% de poudre de charbon de chêne et 1,0% de glycérine en tant qu'agents moussants dans les poudres de verre broyées,
placer les mélanges dans des moules,
évaporation de l'eau libre à 100°C pendant environ 5 heures comme première étape d'un processus de frittage,
soumettre à une deuxième étape du processus de frittage dans laquelle, en maintenant différentes températures, la température maximale atteint 750-800°C et 820-850°C avec des augmentations progressives de la température en approximativement 10 heures,
en commençant par une chute soudaine de la température d'environ 200°C, puis en réduisant progressivement la température pour atteindre la température ambiante après environ 24 heures, démouler les mousses de verre, qui se refroidissent après le traitement thermique, et les découper dans les formes et tailles souhaitées.
